# EUROPEAN PATENT SPECIFICATION

(11) **EP 3 970 491 B1**
(45) Date of publication and mention of the grant of the patent: **18.02.2026**
(21) Application number: 21197610.5
(22) Date of filing: 20.09.2021
(51) Int. Cl.: A01N 35/10, A01N 43/653, A01P 13/00, A01N 25/02, A01N 25/30

(54) **A STABLE HERBICIDAL COMPOSITION**
STABILE HERBIZIDE ZUSAMMENSETZUNG
COMPOSITION HERBICIDE STABLE

(30) Priority: 21.09.2020 GB 202014872
(43) Date of publication of application: 23.03.2022
(73) Proprietor: UPL Corporation Limited, Port Louis (MU); UPL Europe Ltd, Warrington, Cheshire WA3 6YN (GB)
(72) Inventor: PIROTTE, Alan, 6660 Houffalize (BE); HAWKINS, Emma Louise, Evesham, WR11 2LS (GB)
(74) Representative: J A Kemp LLP

(56) References cited:
- WO-A1-2009/031621
- CN-A- 105 145 586
- CN-A- 108 338 169
- US-A- 6 087 305
- US-A- 6 117 823
- US-A1- 2004 097 374
- US-A1- 2004 097 378

## Description

### Field of the invention

The present disclosure relates to stable herbicidal compositions of clethodim or a salt thereof, and carfentrazone-ethyl, or a salt thereof. The present disclosure additionally provides a process of preparing the stable herbicidal composition and a use of the stable herbicidal composition for controlling weeds.

### Background

Cyclohexanedione oxime herbicides (CHD) which are effective at relatively low doses and are readily decomposed, have been developed to reduce herbicide impact on the environment. CHDs have herbicidal activity against a variety of post-emergent grass weeds. CHD herbicides are susceptible to rapid degradation through biotic and abiotic processes. For example, these herbicides are decomposed at a pH of less than 5 and greater than 10, and are photochemically and thermally unstable. Furthermore, these compounds are readily degraded through microbial and plant metabolism. This class of herbicides includes clethodim, sethoxydim, cycloxydim, alloxydim, tralkoxydim, tepraloxydim, clefoxydim, clefoxyfim, butroxydim, and profoxydim.

Clethodim is an important commercial herbicide within the class of cyclohexenedione oximes. It is a selective post-emergence herbicide used to control annual and perennial grasses in a wide variety of broad leaf crops such as soybeans, cotton, flax, peanuts, sunflowers, sugarbeets, potatoes, alfalfa and most vegetables.

Clethodim is sensitive to abiotic transformation or degradation during processing and storage. The influence of pH on the abiotic transformation of clethodim in aqueous solution indicates that the compound is an acid labile herbicide. Further, its degradation increases as the acidity increases in storage. Thus, clethodim is sensitive to acidic pH, such that after 20 hours storage at pH 6 and pH 5, herbicide recovery decreases by 8% and by 37%, respectively. Analysis of the susceptibility aqueous solutions of clethodim to photodegradation (photolysis) and the effect of adjuvants on the photolysis rates, indicates that the photodegradation rates of clethodim were strongly affected by the presence of an adjuvant. The rates of photodegradation of aqueous solutions of clethodim under UV light and sunlight were observed to decrease by up to 7-fold and u to 27-fold in the presence of adjuvants.

The aforementioned factors trigger clethodim degradation in the system, thus rendering clethodim recovery extremely difficult, i.e., an effective amount of clethodim is not available for application due to its degradation either during processing or in storage.

Apart from the above-mentioned factors, the presence of a second herbicide (e.g., a non-cyclohexanedione oxime herbicide) in the system also contributes to clethodim degradation. It has been observed that when clethodim is formulated in combination with another herbicide, the overall stability of the system suffers and clethodim recovery in the final formulation is drastically reduced. Consequently, the amount of active clethodim available for application upon end-use is effectively decreased. Herbicide degradation which is triggered by the presence of another second herbicide in the system is undesirable, not only because it limits efficacy once the solution is applied, but also because it results in an unstable system.

Accordingly, there is remains a need to develop a stable composition comprising a combination of a cyclohexanedione oxime (e.g., clethodim) and another herbicide, in which the rate of degradation of the cyclohexanedione oxime is controlled and its concentration is maintained over a longer period of time.

US 2004/097374 A1 describes oil suspension concentrates based on 2-{1-[2-(4-chlorophenoxy)propoxyimino]butyl}-3-hydroxy-5-(tetrahydrothiopyran-3-yl)cyclohex-2-enone lithium salt and certain formulation auxiliaries. It describes the use of the oil suspension concentrates as crop protection compositions and in particular as rice herbicides.

US 2004/097378 A1 describes liquid formulations that contain a) one or more alkyl esters of polycarboxylic acids, and b) one or more agrochemical substances from the group of ALS inhibitors.

US 6 087 305 A describes mixture consisting essentially of: a) one or more dicarboxylic acid esters of the formula I ROOC-A-COOR (I) in which the radicals R are C₁₋₂₀ alkyl and A is C₁₋₂₀ alkylene, C₂₋₂₀ alkenylene, C₂₋₂₀ alkynylene, C₅₋₆ cycloalkylidene, C₅₋₆ cycloalkenylidene or phenylene and b) the product (II) of the reaction of a triglyceride based on C₂₋₃₀ carboxylic acids and ethylene oxide and/or propylene oxide in the presence of a base. The mixture is useful for the production of crop protection compositions, for herbicidal crop protection compositions, and for controlling undesired plant growth.

WO 2009/031621 A1 describes a liquid agrochemical composition containing an agrochemical active component, a surfactant, an ester solvent having a water solubility of not less than 2% by weight, and an ester solvent having a water solubility of less than 2% by weight (excluding methyl caprylate and methyl caprate). This liquid agrochemical composition is reduced in skin irritation and pungent odor, and a water diluted solution thereof has good emulsion stability. This liquid agrochemical composition may contain 5-50% by weight of water for reducing inflammability.

CN 105 145 586 A describes a weeding composition containing amicarbazone and clethodim which are taken as active ingredients of the weeding composition. The weight ratio of amicarbazone to clethodim is (2-14):1.

CN 108 338 169 A relates to a paddy field herbicidal composition containing active ingredients of profoxydim and carfentrazone-ethyl. The paddy field herbicidal composition has significant synergistic effects.

US 6 117 823 A describes method for controlling undesired vegetation comprises contacting the vegetation with a herbicidally effective amount of a composition containing the compound of the formula ROOC(CH₂)ₙCOOR' wherein R and R' are independently selected from a C₁₋₈ alkyl and n is from 1 to 8.

### SUMMARY

The invention provides a stable herbicidal composition comprising:
at least one first herbicide comprising a cyclohexanedione oxime herbicide which is clethodim, or a salt thereof,
at least one second herbicide,
a recovery promoting agent comprising an alkyl ester of a dicarboxylic acid; and
a solvent comprising a C₁-C₄ alkyl ester of a C₅ -C₂₀ saturated or unsaturated fatty acid, wherein the second herbicide comprises a triazolone herbicide which is carfentrazone-ethyl or a salt thereof,
wherein the composition is an emulsifiable concentrate, and
wherein the recovery promoting agent and the solvent are present in a weight ratio of about 1: 10 to about 10: 1.

The stable herbicidal composition may be prepared by: mixing the first herbicide comprising a cyclohexanedione oxime herbicide, the second herbicide, the recovery promoting agent, and the solvent to produce a stable herbicidal composition.

In another aspect, the present invention provides a process of preparing the stable herbicidal composition, the process comprising:
adding the recovery promoting agent and optionally, one or more surfactants and/or auxiliary ingredients to the solvent to form a mixture; and
adding the first herbicide and the second herbicide to the mixture to produce a stable herbicidal composition.

In another aspect, the invention provides a use of a stable herbicidal composition for controlling weeds at a locus, said stable herbicidal composition comprising
at least one first herbicide comprising a cyclohexanedione oxime herbicide which is clethodim, or a salt thereof,
at least one second herbicide,
a recovery promoting agent comprising an alkyl ester of a dicarboxylic acid;
   and
a solvent comprising a C₁-C₄ alkyl ester of a C₅ -C₂₀ saturated or unsaturated fatty acid, wherein the second herbicide comprises a triazolone herbicide which is carfentrazone-ethyl, or a salt thereof,
wherein the composition is an emulsifiable concentrate, and
wherein a weight ratio of the recovery promoting agent to the solvent is from 1: 10 to 10: 1.

### DETAILED DESCRIPTION

The stable herbicidal composition of the present invention enhances the percent recovery of a cyclohexanedione oxime herbicide when the cyclohexanedione oxime herbicide is formulated in combination with at least carfentrazone-ethyl.

The stable herbicidal compositions comprising the cyclohexanedione oxime herbicide in combination with at least carfentrazone-ethyl may be used in a method of controlling weeds.

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about".

Thus, before describing the present disclosure in detail, it is to be understood that this invention is not limited to particularly exemplified systems or process parameters that may of course, vary. It is also to be understood that the terminology used herein is for the purpose of describing particular embodiments only and is not intended to limit the scope of the invention in any manner. The use of examples anywhere in this specification including examples of any terms discussed herein is illustrative only, and in no way limits the scope and meaning of the invention or of any exemplified term.

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains. The following definitions are provided for clarity.

The use of the terms "a" and "an" and "the" and similar referents (especially in the context of the claims) are to be construed to cover both the singular and the plural, unless otherwise indicated herein or clearly contradicted by context. The terms first, second etc. as used herein are not meant to denote any particular order, but simply for convenience to denote a plurality of, for example, layers. The terms "comprising", "having", "including", and "containing" are to be construed as open-ended terms (i.e., meaning "including, but not limited to") unless otherwise noted.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 10% or ± 5% of the stated value.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein. As used herein the term "plant" or "crop" refers to whole plants, plant organs (e.g., leaves, stems, twigs, roots, trunks, limbs, shoots, fruits etc.), plant cells, or plant seeds. This term also encompasses plant crops such as fruits. The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein, the term "locus" as used herein denotes the vicinity or area designated for growth of a desired crop, and in which control of the spread of weeds is desired. The locus includes the vicinity of desired crop plants wherein weeds have either emerged or are most likely to emerge or are yet to emerge.

As used herein, an "effective amount" is an amount of active ingredient such as a herbicide which has an adverse effect on a weed. The adverse effect includes one or more of a deviation from natural development, killing of the weed, structural damage to the weed, desiccation, and/or growth retardation.

The salts referred to herein are agriculturally acceptable salts. As used herein, an "agriculturally acceptable salt" means a salt which is known and accepted for use in agricultural or horticultural use.

The dibasic ester mixture refers to a mixture of 55% to 75% of a dibasic ester of glutaric acid, 15% to 25% of a dibasic ester of succinic acid and 10% to 15% of a dibasic ester of adipic acid.

As used herein, the term "stable" refers to chemical and/or physical stabilization of an active compound (e.g., herbicide).

The term "emulsion stability" refers to the system's ability to resist changes in its physicochemical properties over a time interval.

The stability tests described herein are conducted according to established Collaborative international Pesticides Analytical Council (CIPAC) methodologies.

Cyclohexanedione oxime compounds are known as effective herbicides. Therefore, the terms "cyclohexanedione oxime herbicide", "cyclohexanedione oxime" and "cyclohexanedione oxime compound" may be used interchangeably in the present disclosure.

A "recovery promoting agent" comprises an alkyl ester of a dicarboxylic acid. As used in this description, the term "recovery promoting agent" can refer more particularly to a mixture of alkyl esters of dicarboxylic acids, and in particular, a mixture of dibasic esters of dicarboxylic acids wherein the dicarboxylic acids are short-chain acids such as adipic acid, glutaric acid, succinic acid, or a combination thereof.

As used herein, a "methyl ester solvent" is a mixture of long chain fatty acid methyl esters, for example, a mixture of C₁₆-₁₈ unsaturated fatty acid methyl esters and C₁₈-unsaturated fatty acid methyl esters. In an aspect, the methyl ester solvent is a mixture of unsaturated (C16-C18)-alkylcarboxylic acid methyl esters and unsaturated (C18)- alkylcarboxylic acid methyl esters, which are vegetable oil derivatives. An example of the methyl ester solvent includes methyl soyate.

The terms "percent recovery" or "%recovery" refer to the amount of active cyclohexenedione oxime herbicide (e.g., clethodim) remaining in the stable herbicidal composition of the present disclosure after storing the composition for a defined period of time under Accelerated Heat Stability (AHS) conditions (about 54°C) and low temperature conditions (e.g., about -10°C).

"Alkyl" as used herein means a straight or branched chain saturated aliphatic hydrocarbon having the specified number of carbon atoms. Alkyl groups include, for example, groups having from 1 to 50 carbon atoms (C1 to C50 alkyl).

"Alkali metal" means a metal of Group 1 of the Periodic Table of the Elements, i.e., lithium, sodium, potassium, rubidium, cesium, and francium. "Alkaline-earth metal" means a metal of Group 2 of the Periodic Table of the Elements, i.e., beryllium, magnesium, calcium, strontium, barium, and radium.

As used herein "low shear" refers to mixing which occurs through non-turbulent (e.g., smooth or laminar-type) flow. For example, low shear conditions are present when the mixing of the materials occurs at a low speed and the material's particles move in an orderly fashion throughout the mixer without inducing turbulence in the mixture.

Various solutions have been proposed to stabilize formulations including a cyclohexanedione oxime herbicide, and in particular formulations including clethodim. As a general practice, clethodim stabilization to enhance its recovery is managed by the selection of appropriate solvents or surfactants or combinations thereof. However, there is still a need to develop a stable herbicidal composition comprising clethodim in combination with another herbicide, and in which the rate of degradation of clethodim is controlled and an effective concentration of clethodim can be maintained in the formulation over an increased period of time. Hence, there is a long-lasting need in the art to provide a physically and chemically stable composition comprising a cyclohexanedione oxime herbicide, which has high stability during the preparation, storage, and application process of the composition.

Surprisingly, the inventors have advantageously discovered that a stable emulsifiable concentrate composition of a cyclohexanedione oxime herbicide which is clethodim or a salt thereof in combination with another herbicide which is carfentrazone-ethyl or a salt thereof can be obtained by using a recovery promoting agent and a solvent comprising a C₁-C₄ alkyl ester of a C₅ -C₂₀ saturated or unsaturated fatty acid in a specific ratio of about 1:10 to about 10:1. As used herein, the ratio is a weight ratio. The inventors have exerted tremendous ingenuity by arriving at the specific combination of the recovery promoting agent and the solvent in the ratios defined herein, to provide a stable composition of a cyclohexanedione oxime herbicide and one more herbicide. In an aspect, the ratio of recovery promoting agent to solvent is 1:3 to 3:1.

Within such a specific ratio of 1:3 to 3:1, the recovery promoting agent and the solvent prevent degradation of the cyclohexanedione oxime herbicide in the liquid composition, thereby increasing its recovery upon storage and use.

Accordingly, in the present invention a stable herbicidal composition comprises:
(a) at least one first herbicide comprising a cyclohexanedione oxime herbicide which is clethodim, or a salt thereof,
(b) at least one second herbicide which is carfentrazone-ethyl, or a salt thereof,
(c) a recovery promoting agent comprising an alkyl ester of a dicarboxylic acid; and
(d) a solvent comprising a C₁-C₄ alkyl ester of a C₅ -C₂₀ saturated or unsaturated fatty acid,

wherein the composition is an emulsifiable concentrate, and
wherein the recovery promoting agent and the solvent are present in a weight ratio of about 1: 10 to about 10: 1.

In an aspect, the stable herbicidal composition comprises a cyclohexanedione oxime herbicide which is clethodim, or an agriculturally acceptable salt thereof.

According to an embodiment the cyclohexanedione oxime herbicide in the stable herbicidal composition is clethodim.

According to an embodiment the stable herbicidal composition comprises from about 0.1% weight per weight (w/w) to about 70% w/w, or from about 0.5% w/w to about 60% w/w of the cyclohexanedione oxime based on the total weight of the stable herbicidal composition.

According to an embodiment the stable herbicidal composition comprises from about 1% w/w to about 50% w/w of the cyclohexanedione oxime based on the total weight of the stable herbicidal composition.

According to a preferred embodiment the stable herbicidal composition comprises from about 10% w/w to about 30% w/w of the cyclohexanedione oxime based on the total weight of the stable herbicidal composition.

The stable herbicidal composition comprises at least one additional (second) herbicide.

The additional herbicide is carfentrazone-ethyl, or a salt thereof.

According to an embodiment the stable herbicidal composition comprises from about 0.1% w/w to about 70% w/w, or from about 0.5% w/w to about 60% w/w of the additional herbicide based on the total weight of the stable herbicidal composition.

According to an embodiment the stable herbicidal composition comprises from about 1% w/w to about 50% w/w of the additional herbicide based on the total weight of the stable herbicidal composition.

According to a preferred embodiment the stable herbicidal composition comprises from about 0.5% w/w to about 20% w/w of the additional herbicide based on the total weight of the stable herbicidal composition.

According to a preferred embodiment the stable herbicidal composition comprises from about 1% w/w to about 10% w/w of the additional herbicide based on the total weight of the stable herbicidal composition.

The stable herbicidal composition comprises a recovery promoting agent.

The recovery promoting agent comprises an alkyl ester of a dicarboxylic acid.

According to an embodiment the recovery promoting agent comprises a dibasic ester of a dicarboxylic acid.

According to an embodiment recovery promoting agent of the stable herbicidal composition is a mixture of different dibasic esters (also referred to as dimethyl esters) of dicarboxylic acids and are commercially produced from short-chain dicarboxylic acids such as adipic acid, glutaric acid, and succinic acid. In an aspect, the recovery promoting agent comprises a dibasic ester of adipic acid, a dibasic ester of glutaric acid, a dibasic ester of succinic acid, or a combination thereof

According to an embodiment the recovery promoting agent of the stable herbicidal composition is a mixture of a dibasic ester of adipic acid and a dibasic ester of glutaric acid.

According to an embodiment the recovery promoting agent of the stable herbicidal composition is a mixture of a dibasic ester of glutaric acid and a dibasic ester of succinic acid.

According to an embodiment the recovery promoting agent of the stable herbicidal composition is a mixture of a dibasic ester of succinic acid and a dibasic ester of adipic acid.

According to an embodiment the recovery promoting agent of the stable herbicidal composition is a mixture of a dibasic ester of succinic acid and a dibasic ester of glutaric acid.

According to an embodiment the recovery promoting agent of the stable herbicidal composition is a mixture of dimethyl glutarate, dimethyl succinate and dimethyl adipate.

According to an embodiment the recovery promoting agent of the stable herbicidal composition is a mixture of 55% to 75% of a dibasic ester of glutaric acid, 15% to 25% of a dibasic ester of succinic acid and 10% to 15% of a dibasic ester of adipic acid.

According to an embodiment the stable herbicidal composition comprises from about 1% w/w to about 70% w/w, or from about 5% w/w to about 60% w/w of the recovering promoting agent based on the total weight of the stable herbicidal composition.

According to preferred embodiment \the stable herbicidal composition comprises from about 10% w/w to about 50% w/w of the recovery promoting agent based on the total weight of the stable herbicidal composition.

The stable herbicidal composition comprises a solvent.

The solvent in the stable herbicidal composition comprises a C₁-C₄ alkyl ester (preferably methyl ester) of a C₅-C₂₀ saturated or unsaturated fatty acid. The solvent may comprise a mixture of such esters.

According to an embodiment the solvent in the stable herbicidal composition comprises a methyl ester of a C₅-C₂₀ fatty acid.

According to an embodiment the solvent in the stable herbicidal composition comprises a mixture of a C₁₆₋₁₈ unsaturated fatty acid methyl ester and a C₁₈-unsaturated fatty acid methyl ester.

According to an embodiment the stable herbicidal composition comprises from about 1% w/w to about 99% w/w, or from about 10% w/w to about 90% w/w of the solvent based on the total weight of the stable herbicidal composition.

According to a preferred embodiment the stable herbicidal composition comprises from about 30% w/w to about 80% w/w of the solvent based on the total weight of the stable herbicidal composition.

The recovery promoting agent and the solvent are in a ratio of about 1:10 to about 10:1, optionally about 1:5 to about 5:1.

According to a preferred embodiment the recovery promoting agent and the solvent are in a ratio of about 1:3 to about 3:1.

According to an embodiment the recovery promoting agent and the solvent are in a ratio of about 1:1.5.

According to preferred embodiment recovery promoting agent and the solvent are in a ratio of about 1:1.

In an embodiment, the stable herbicidal composition may further include one or more safeners. Examples of safeners include mefenpyr-diethyl, isoxadifen-ethyl, cloquintocet-mexyl, benoxacor, flurazole, and fluxofenim.

According to an embodiment the stable herbicidal composition may further include one or more adjuvants selected from surfactants, crop oil, fertilizers, dispersing agents, compatibility agents, foaming activators, foam suppressants, correctives, spray colorants (dyes), or a combination thereof.

According to an embodiment the stable herbicidal composition comprises a surfactant selected from anionic and non-ionic surfactants.

According to an embodiment non-ionic surfactants comprise ethoxylated fatty acids, alcohol ethoxylates, tristyrylphenol ethoxylates, ethoxylated sorbitan fatty acid esters (examples include polyoxyethylene sorbitan esters widely known as polysorbates and also as Tween^{®}), or a combination thereof.

According to an embodiment anionic surfactants comprise ether sulfates (examples of ether sulfates include but are not limited to sodium or ammonium salts of fatty alcohol ether sulfates, sodium or ammonium salts of alkylaryl ether sulfates, sodium or ammonium salts of ethoxylated alkylaryl ether sulfates, POE tallow amine alkylphenol ether sulfates, and POE tallow amine alcohol ether sulfate), phosphate esters, sulfosuccinates (examples of the sulfosuccinates include but are not limited to sodium dioctyl sulfosuccinate, sodium di-(2-ethylhexyl) sulfosuccinate, sodium dihexyl sulfosuccinate, sodium dicyclohexyl sulfosuccinate, sodium diamyl sulfosuccinate, sodium diisobutyl sulfosuccinate, and sodium ditridecyl sulfosuccinate.), salts of alkylbenzene sulphonate (example includes calcium dodecylbenzenesulfonic acid), or a combination thereof.

According to an embodiment the stable herbicidal composition comprises from about 0.1% to about 30%, or from about 0.5% to about 25% of adjuvant based on the total weight of the stable herbicidal composition.

The stable herbicidal composition is formulated as emulsifiable concentrate (EC).

The stable composition of the present invention may further comprise one or more auxiliary agents such as dispersants, wetting agents, fillers, surfactants, anticaking agents, pH-regulating agents, preservatives, biocides, antifoaming agents, colorants, and other formulation aids.

Exemplary dispersants include ionic and nonionic dispersants such as salts of polystyrene sulphonic acids, salts of polyvinyl sulphonic acids, salts of naphthalenesulphonic acid/formaldehyde condensates, salts of condensates of naphthalenesulphonic acid, phenolsulphonic acid and formaldehyde, and salts of lignosulphonic acid, such as sodium lignosulphonate and modified sodium lignosulfonate; polyethylene oxide/polypropylene oxide block copolymers, polyethylene glycol ethers of linear alcohols, reaction products of fatty acids with ethylene oxide and/or propylene oxide, polyvinyl alcohol, polyvinylpyrrolidone, copolymers of polyvinyl alcohol and polyvinylpyrrolidone, copolymers of (meth)acrylic acid and (meth)acrylic esters, alkyl ethoxylates, alkylarylethoxylates, ethoxylated alkylarylphosphates, a sulphated ester, or a combination thereof.

Exemplary wetting agents include soaps, silicone oil, magnesium stearate, salts of aliphatic monoesters of sulphuric acid including but not limited to sodium lauryl sulphate; sulfoakylamides and salts thereof including but not limited to N-methyl-N-oleoyltaurate sodium salt; alkylarylsulfonates including but not limited to akylbenzenesulfonates, alkyl naphthalenesulfonates and salts thereof; and salts of ligninsulfonic acid including but not limited to sodium diisopropyl naphthalene sulfonate.

Exemplary fillers include insoluble fillers and soluble fillers like silica, amorphous silica, fumed diatomaceous earth kaolin, clay, and bentonite.

Exemplary antifoams include silicones, long-chain alcohols, and salts of fatty acids.

Exemplary colorants include, for example, red, blue and green colorants. In an aspect, the colorants are pigments, which are sparingly soluble in water, and/or dyes, which are watersoluble. Examples include inorganic coloring agents such as iron oxide, titanium oxide, and iron hexacyanoferrate and organic coloring agents such as alizarin, azo and phthalocyanin coloring agents.

According to an embodiment the stable herbicidal composition comprises from about 0.1% w/w to about 70% w/w of cyclohexanedione oxime herbicide, 0.1% w/w to about 70% w/w of additional herbicide, 1% w/w to about 70% w/w of recovery promoting agent, and from about 1% w/w to about 99% w/w of solvent based on the total weight of the stable herbicidal composition.

According to an embodiment the stable herbicidal composition comprises from about 0.5% w/w to about 60% w/w of cyclohexanedione oxime herbicide, 0.5% w/w to about 60% w/w of additional herbicide, 5% w/w to about 60% w/w of recovery promoting agent, and from about 10% w/w to about 90% w/w of solvent based on the total weight of the stable herbicidal composition.

According to an embodiment the stable herbicidal composition comprises from about 1% w/w to about 50% w/w of cyclohexanedione oxime herbicide, 1% w/w to about 50% w/w of additional herbicide, 10% w/w to about 50% w/w of recovery promoting agent, and from about 30% w/w to about 80% w/w of solvent based on the total weight of the stable herbicidal composition.

According to a preferred embodiment the stable herbicidal composition comprises from about 10% w/w to about 30% w/w of cyclohexanedione oxime herbicide, from about 1% w/w to about 10% w/w of additional herbicides, from about 10% w/w to about 50% w/w of recovery promoting agent, from about 30% w/w to about 80% w/w of solvent, each based on the total weight of the stable herbicidal composition.

In an aspect, the recovery promoting agent comprises dimethyl glutarate, dimethyl succinate, and dimethyl adipate.

In an aspect, the solvent comprises a methyl ester solvent.

A process of preparing the stable herbicidal compositions comprises: mixing the cyclohexanedione oxime herbicide, the additional herbicide, the recovery promoting agent, and the solvent to produce a stable herbicidal composition.

According to an embodiment the recovery promoting agent and the solvent are in a ratio of about 1:3 to about 3:1, and the process comprises mixing the cyclohexanedione oxime herbicide, the additional herbicide, the recovery promoting agent, and the solvent to produce a stable herbicidal composition.

According to an embodiment a process of preparing stable herbicidal composition comprises:
1) adding the recovery promoting agent and optionally, adding one or more surfactants and/or auxiliary ingredients to the solvent to form a mixture; and
2) adding the cyclohexanedione oxime herbicide and the additional herbicide to the mixture to produce the stable herbicidal composition.

According to an embodiment the recovery promoting agent and the solvent are in a ratio of about 1:3 to about 3:1.

According to an embodiment a process of preparing the stable herbicidal composition comprises:
1) adding the recovery promoting agent and optionally, one or more surfactants and/or other auxiliary ingredients to the solvent to form a mixture; and
2) adding cyclohexanedione oxime herbicide and the additional herbicide to the mixture, under low shear; and
3) emulsifying the mixture under low shear to obtain the stable herbicidal composition as an emulsifiable concentrate (EC).

The cyclohexanedione oxime herbicide is clethodim, and the additional herbicide is carfentrazone-ethyl.

According to an embodiment the mixing of the recovery promoting agent with solvent is carried out under low shear to facilitate emulsification.

According to an embodiment cyclohexanedione the addition of the cyclohexanedione oxime and the additional herbicide into the mixture of the recovery promoting agent and solvent is carried out under low shear to obtain the EC composition.

According to an embodiment the mixing and emulsification steps in the process are carried out at a temperature in the range of about 20° C. to about 80° C., or from about 20° C to about 70° C, or from about 20° C. to about 50°.

According to an embodiment emulsification is carried out for a period of about 30 seconds to about 24 hours, or from about five minutes to about three hours.

According to an embodiment operating conditions to yield particles of a desired size will depend on a variety of factors, including, where applicable, the temperature at which the emulsification is performed, the addition rate of the recovery promoting agent, the solvent, and the active ingredients, the emulsifying equipment used, and the amount of emulsifiers used.

The present invention also relates to a method of controlling weeds, which method comprises applying an effective amount of an herbicidal composition to a weed, a crop, a locus, or a habitat area, the herbicidal composition as defined above.

According to an embodiment the recovery promoting agent and the solvent are in a ratio of about 1:3 to about 3:1.

According to an embodiment the cyclohexenedione oxime herbicide comprises clethodim, the second herbicide comprises carfentrazone-ethyl, the recovery promoting agent comprises dimethyl glutarate, dimethyl succinate, dimethyl adipate or a combinations thereof, and the solvent comprises a mixture of a methyl ester of C₁₆₋₁₈ unsaturated fatty acid and a methyl ester of C₁₈ unsaturated fatty acid, wherein the recovery promoting agent and solvent are in a ratio of about 1:3 to about 3:1.

According to an embodiment the stable herbicidal composition is used to control wide range of weeds.

According to an embodiment the stable herbicidal composition is used to control broad spectrum of annual and perennial weeds at pre-emergence and post-emergence stages.

According to an embodiment the stable herbicidal composition is used in the form that allows the active compounds to be taken up by the plants.

According to an embodiment the composition has efficient recovery % of the cyclohexenedione oxime herbicide of greater than 90%, or greater than 92%, or greater than 93% following storage at 54°C for two weeks. In an aspect, the recovery% of cyclohexenedione oxime herbicide is in the range of 93% to 100% following storage at 54°C for two weeks.

The inventive herbicidal compositions have efficient emulsion stability.

According to an embodiment, the compositions disclosed herein are used for controlling the growth of weeds at a locus.

According to an embodiment, the composition used for controlling the growth of weeds at a locus comprises clethodim, carfentrazone-ethyl, a recovery promoting agent comprising dimethyl glutarate, dimethyl succinate, dimethyl adipate or combinations thereof, and a solvent comprising a mixture of a methyl ester of C₁₆₋₁₈ unsaturated fatty acid and a methyl ester of C₁₈ unsaturated fatty acid.

The stable herbicidal composition can be used as a source of active agrochemical ingredients and will typically be diluted to provide an end-use formulation, typically a spray formulation. The herbicidal composition may be diluted with water 1 to 10,000 times, particularly 10 to 1,000 times to form the spray formulation. The stable herbicidal composition may be diluted to provide an agrochemical active concentration of about 0.5 wt.% to about 1 wt.%. In the diluted composition the agrochemical active concentration may be in the range from about 0.001 wt.% to about 1 wt.% of the total formulation, as sprayed.

Spray formulations include all the components desired to be applied to the plants or their environment. Spray formulations can be made up by simple dilution of the stable herbicidal composition containing the agrochemically active ingredients, by mixing the individual agrochemically active ingredients together, or by a combination of diluting a stable herbicidal composition and adding further individual agrochemically active ingredients or mixtures of agrochemically active ingredients. Typically, such end use mixing is carried out in the tank from which the formulation is sprayed, or alternatively in a holding tank for filling the spray tank. Such mixing and mixtures are typically termed tank mixing and tank mixtures, respectively.

The composition may be provided as a kit, said kit comprises a plurality of components, each of which includes at least one of the ingredients of the disclosed stable herbicidal compositions.

A kit comprises,
(a) at least the first herbicide comprising a cyclohexanedione oxime herbicide which is clethodim, or a salt thereof,
(b) at least the second herbicide which is carfentrazone-ethyl, or a salt thereof,
(c) the recovery promoting agent comprising an alkyl ester of a dicarboxylic acid; and
(d) the solvent comprising a C₁-C₄ alkyl ester of a C₅-C₂₀ saturated or unsaturated fatty acid, and wherein the recovery promoting agent and the solvent are present in a weight ratio of about 1:10 to about 10:1.

According to an embodiment, the recovery promoting agent and the solvent are in a ratio of about 1:3 to about 3:1.

The kits may include at least one of the components used to prepare the stable herbicidal composition or may include all of the components. For example, the kits may include the cyclohexenedione oxime herbicide, the additional herbicide, the recovery promoting agent and the solvent, all as defined above.

One or more of the components may be combined together or pre-formulated within the kit. Where more than two components are provided in a kit, the components may already be combined together and as such are packaged in a single container such as a vial, bottle, can, pouch, bag or canister.

Two or more components of a kit may be packaged separately, i.e., not pre-formulated. As such, the kits may include one or more separate containers such as vials, cans, bottles, pouches, bags and/or canisters, each container containing a separate component for the stable herbicidal composition.

In both forms, a single component of the kit may be applied separately from or together with the other components, or as a component of a combined composition for preparing the stable herbicidal compositions disclosed herein.

The following examples illustrate the disclosure, but by no means intend to limit the scope of the claims.

### EXAMPLES

### Example 1: Preparation of Clethodim (120g/L) and Carfentrazone-ethyl (20g/L) Emulsifiable Concentrate (EC)

**Table 1**

| Ingredient | Quantity (% w/w) |
|---|---|
| Clethodim | 12.84 |
| Carfentrazone-ethyl | 2.14 |
| Methyl ester solvent | 47.91 |
| Sodium dioctyl sulfosuccinate | 5 |
| Polysorbate 80 | 5 |
| Dibasic ester mixture | 27.1 |
| TOTAL | 100 |

The materials in Table 1 were used to prepare the herbicidal composition of Example 1. In particular, 27.1g of dibasic ester mixture was added to 47.91 g of a mixture of C₁₆₋₁₈ unsaturated fatty acid methyl ester and C₁₈-unsaturated fatty acid methyl ester and then 5 g sodium dioctyl sulfosuccinate and 5 g polysorbate 80 were further added under low shear to obtain a mixture. 12.84 g clethodim and 2.14 g carfentrazone-ethyl were then added to the mixture under low shear to obtain a clear amber liquid as a stable emulsifiable concentrate. The dibasic ester mixture refers to a mixture of 55% to 75% of a dibasic ester of glutaric acid, 15% to 25% of a dibasic ester of succinic acid and 10% to 15% of a dibasic ester of adipic acid.

### Example 2: Clethodim (120g/L) and Carfentrazone-ethyl (20g/L) Emulsifiable Concentrate (EC)

**Table 2**

| Ingredients | Quantity (% w/w) |
|---|---|
| Clethodim | 12.70 |
| Carfentrazone-ethyl | 2.00 |
| Dibasic ester mixture | 34.04 |
| Methyl ester solvent | 41.26 |
| Polysorbate 80 | 5.00 |
| Sodium bis(2-ethyl-1-hexyl)sulfosuccinate | 5.00 |
| Silicone Antifoam | 0.01 |
| TOTAL | 100 |

The materials in Table 2 were used to prepare the herbicidal composition of Example 2. In particular, clethodim, carfentrazone-ethyl, dibasic ester mixture, a mixture of C₁₆₋₁₈ unsaturated fatty acid methyl ester and C₁₈-unsaturated fatty acid methyl ester (methyl ester solvent), polysorbate 80, sodium bis(2-ethyl-1-hexyl)sulfosuccinate, and antifoam were mixed in the above mentioned quantities and prepared according to the process disclosed in Example 1.

### Example 3: Clethodim (120g/L) and Carfentrazone-ethyl (20g/L) Emulsifiable Concentrate (EC) (Comparative Example)

**Table 3**

| Ingredients | Quantity (% w/w) |
|---|---|
| Clethodim | 12.70 |
| Carfentrazone-ethyl | 2.00 |
| Dibasic ester mixture | 75.30 |
| Polysorbate 80 | 5.00 |
| Sodium bis(2-ethyl-1-hexyl)sulfosuccinate | 5.00 |
| Silicone Antifoam | 0.01 |
| TOTAL | 100 |

The materials in Table 3 above were used to prepare the herbicidal composition of Example 3. In particular, clethodim, carfentrazone-ethyl, dibasic ester mixture, polysorbate 80, sodium bis(2-ethyl-1-hexyl)sulfosuccinate, and antifoam were mixed in the above mentioned quantities and prepared according to the process disclosed in Example 1.

### Example 4: Clethodim (120g/L) and Carfentrazone-ethyl (20g/L) Emulsifiable Concentrate (EC) (Comparative Example)

**Table 4**

| Ingredients | Quantity (% w/w) |
|---|---|
| Clethodim | 12.70 |
| Carfentrazone-ethyl | 2.00 |
| Methyl ester solvent | 75.30 |
| Polysorbate 80 | 5.00 |
| Sodium bis(2-ethyl-1-hexyl)sulfosuccinate | 5.00 |
| Silicone Antifoam | 0.01 |
| Total | 100 |

The materials in Table 4 above were used to prepare the herbicidal composition of Example 4. In particular, Clethodim, carfentrazone-ethyl, a mixture of C₁₆₋₁₈ and C₁₈-unsaturated fatty acids methyl esters (methyl ester solvent), polysorbate 80, sodium bis(2-ethyl-1-hexyl)sulfosuccinate and antifoam were mixed in above mentioned quantity and prepared according to the process disclosed in Example 1.

### Example 5: Clethodim (120g/L) and Carfentrazone-ethyl (20g/L) Emulsifiable Concentrate (EC)

**Table 5**

| Ingredients | Quantity (% w/w) |
|---|---|
| Clethodim | 12.70 |
| Carfentrazone - ethyl | 2.00 |
| Dibasic ester mixture | 20.00 |
| Methyl ester solvent | 55.30 |
| Polysorbate 80 | 5.00 |
| Sodium bis(2-ethyl-1-hexyl)sulfosuccinate | 6.00 |
| Silicone Antifoam | 0.01 |

The materials in Table 5 above were used to prepare the herbicidal composition of Example 5. In particular, Clethodim, carfentrazone-ethyl, dibasic ester mixture, a mixture of C₁₆₋₁₈ and C₁₈-unsaturated fatty acids methyl esters (Methyl ester solvent), polysorbate 80, Sodium bis(2-ethyl-1-hexyl)sulfosuccinate and antifoam were mixed in above mentioned quantities and prepared according to the process disclosed in Example 1.

### Example 6: Clethodim (120g/L) and Carfentrazone-ethyl (20g/L) Emulsifiable Concentrate (EC)

**Table 6**

| Ingredients | Quantity (% w/w) |
|---|---|
| Clethodim | 12.70 |
| Carfentrazone-ethyl | 2.00 |
| Dibasic ester mixture | 30.00 |
| Methyl ester solvent | 45.30 |
| Polysorbate 80 | 5.00 |
| Sodium bis(2-ethyl-1-hexyl)sulfosuccinate | 8.33 |
| Silicone Antifoam | 0.01 |

The materials in Table 6 above were used to prepare the herbicidal composition of Example 6. In particular, Clethodim, carfentrazone-ethyl, dibasic ester mixture, a mixture of C₁₆₋₁₈ and C₁₈-unsaturated fatty acids methyl esters (methyl ester solvent), polysorbate 80, Sodium bis(2-ethyl-1-hexyl)sulfosuccinate and antifoam were mixed in above mentioned quantity and prepared according to the process disclosed in Example 1.

### Example 7: Clethodim (120g/L) and Carfentrazone-ethyl (20g/L) Emulsifiable Concentrate (EC)

**Table 7**

| Ingredients | Quantity (% w/w) |
|---|---|
| Clethodim | 12.70 |
| Carfentrazone-ethyl | 2.00 |
| Dibasic ester mixture | 40.00 |
| Methyl ester solvent | 35.30 |
| Polysorbate 80 | 5.00 |
| Sodium bis(2-ethyl-1-hexyl)sulfosuccinate | 1.67 |
| Silicone Antifoam | 0.01 |

The materials in Table 7 above were used to prepare the herbicidal composition of Example 7. In particular, Clethodim, carfentrazone-ethyl, dibasic ester mixture, Methyl ester solvent, polysorbate 80, Sodium bis(2-ethyl-1-hexyl)sulfosuccinate and antifoam were mixed in above mentioned quantities and prepared according to the process disclosed in Example 1.

### Example 8: Clethodim (120g/L) and Carfentrazone-ethyl (20g/L) Emulsifiable Concentrate (EC)

**Table 8**

| Ingredients | Quantity (% w/w) |
|---|---|
| Clethodim | 12.70 |
| Carfentrazone-ethyl | 2.00 |
| Dibasic ester mixture | 50.00 |
| Methyl ester solvent | 25.30 |
| Polysorbate 80 | 5.00 |
| Sodium bis(2-ethyl-1-hexyl)sulfosuccinate | 4.00 |
| Silicone Antifoam | 0.01 |

The materials in Table 8 above were used to prepare the herbicidal composition of Example 8. In particular, Clethodim, carfentrazone-ethyl, dibasic ester mixture, a mixture of C₁₆₋₁₈ and C₁₈-unsaturated fatty acids methyl esters (Methyl ester solvent), polysorbate 80, Sodium bis(2-ethyl-1-hexyl) sulfosuccinate and antifoam were mixed in above mentioned quantity and prepared according to the process disclosed in Example 1.

### Clethodim recovery and stability of product on dilution

The EC composition of Example 1prepared according to the process disclosed herein was used to study clethodim recovery in the EC compositions as well as stability of the composition after dilution.

It was found that almost the entire amount of clethodim was recovered in the EC composition of Example 1 at 0 days in ambient conditions, i.e. just after preparation. The amount of clethodim in the EC composition of Example 1 was also studied after 14 days storage in Accelerated Heat Stability (AHS) conditions (at 54°C) and in low temperature conditions (at -10°C). Clethodim degradation was found to be within the acceptable range for both AHS and low temperature storage. This suggested that the recovery promoting agent and solvent in a specific ratio stabilized clethodim with minimal degradation of the active.

The composition of Example 1 was diluted with water to test emulsion stability, and the diluted emulsion of cyclohexenedione oxime herbicide and carfentrazone-ethyl was found to be quite stable without any sedimentation or phase separation. This stability of the composition was consistent, after 1 hour and after 24 hours at room temperature. (Table 9)

**Table 9**

| Example | Initial 0 days | 14 days (Clethodim Recovery) | | | Emulsion Stability (Upon dilution) | |
|---|---|---|---|---|---|---|
| | % AI | % AI -10°C | % AI 54°C | % Change (Degradation) | 1 Hour | 24 Hours |
| 1 | 12.21 | 12.81 | 12.09 | -5.62 | <0.05 ml cream | 0.7 ml cream/oil |

| | | | | | | |
|---|---|---|---|---|---|---|
| AI: active ingredient | | | | | | |

Similarly, the EC compositions of Example 2, Example 5, Example 6, Example 7 and Example 8 were tested to ascertain clethodim recovery in the EC compositions under AHS conditions as well as stability of the composition after dilution (storage at RT). Each of the compositions of Examples 2, 5, 6, 7, and 8 were found to be quite stable with clethodim degradation within acceptable limit as well as stability of emulsion in 1 hour as well as 24 hours. However, the EC composition of Example 4 failed in emulsion stability in both the 1 hour testing as well as 24 hours testing. (Table 11).

**Table 10**

| Composition | Ex-2 | Ex-5 | Ex-6 | Ex-7 | Ex-8 |
|---|---|---|---|---|---|
| Clethodim Recovery (%) 2 Weeks, 54°C, AHS | 93.85 | 93.89 | 93.27 | 93.10 | 93.61 |
| Emulsion stability after 1 hour (ml) | 0.35 | 0.8 | 0.45 | 0.05 | 0 |
| Emulsion stability after 24 hours (ml) | 1.8 | 2.2 | 1.6 | 0.9 | 0.25 |

**Table 11: Emulsion stability of compositions disclosed in Ex-3 and Ex-4**

| Composition | Ex-3 (Comparative Example) | Ex-4 (Comparative Example) |
|---|---|---|
| Emulsion stability after 1 hour (ml) | 0 | 1.4 |
| Emulsion stability after 24 hours (ml) | 0.6 | 3.0 |

Therefore, the inventors of the present disclosure have successfully discovered a way to stabilize a cyclohexenedione oxime herbicide when combined with another herbicide through the use of the recovery promoting agent and the solvent, and in particular, when the ratio of recovery promoting agent to the solvent is 1:3 to 3:1. The recovery promoting agent along with the solvent in a specific ratio imparted stability to the concentrated composition and also upon dilution for end-use.

## Claims

1. A stable herbicidal composition comprising:
at least one first herbicide comprising a cyclohexanedione oxime herbicide which is clethodim,
or a salt thereof,
at least one second herbicide,
a recovery promoting agent comprising an alkyl ester of a dicarboxylic acid; and
a solvent comprising a C₁-C₄ alkyl ester of a C₅ -C₂₀ saturated or unsaturated fatty acid,
wherein the second herbicide comprises a triazolone herbicide which is carfentrazone-ethyl or a salt thereof,
wherein the composition is an emulsifiable concentrate, and
wherein the recovery promoting agent and the solvent are present in a weight ratio of about 1: 10 to about 10:1, wherein "about" means ∓10 % of the stated value.

2. The stable herbicidal composition as claimed in claim 1, wherein the recovery promoting agent comprises a mixture of dibasic esters of dicarboxylic acid.

3. The stable herbicidal composition as claimed in claim 2, wherein the recovery promoting agent comprises dimethyl glutarate, dimethyl succinate, dimethyl adipate, or a combination thereof.

4. The stable herbicidal composition as claimed in claim 1, wherein the solvent comprises a methyl ester of a C₅₋₂₀ fatty acid, a mixture of C₁₆₋₁₈ unsaturated fatty acid methyl ester and C₁₈-unsaturated fatty acid methyl ester, or a combination thereof.

5. The stable herbicidal composition as claimed in claim 1, wherein the recovery promoting agent and the solvent are present in a weight ratio of about 1:3 to about 31, wherein "about" means ∓10 % of the stated value.

6. The stable herbicidal composition as claimed in claim 1, wherein the recovery promoting agent and the solvent are present in a weight ratio of 1:1.

7. The stable herbicidal composition as claimed in claim 1, wherein the composition comprises
from about 0.1% w/w to about 70% w/w cyclohexanedione oxime herbicide, 0.1% w/w to about 70% w/w second herbicide, 1 % w/w to about 70% w/w recovery promoting agent, and
from about 1% w/w to about 99% w/w solvent, based on the total weight of the stable herbicidal composition, wherein "about" means ∓10 % of the stated value.

8. The stable herbicidal composition as claimed in claim 1, wherein the composition comprises from about 10% w/w to about 30% w/w clethodim, from about 1% w/w to about 10% w/w of carfentrazone-ethyl, from about 10% w/w to about 50% w/w of a mixture comprising dimethyl glutarate, dimethyl succinate, and dimethyl adipate, and from about 30% w/w to about 80% w/w of a methyl ester solvent, based on the total weight of the stable herbicidal composition, wherein "about" means ∓10 % of the stated value.

9. A process of preparing the stable herbicidal composition of claim 1, the process comprising:
adding the recovery promoting agent and optionally one or more surfactants and/or auxiliary ingredients to the solvent to form a mixture; and
adding the first herbicide and the second herbicide to the mixture to produce the stable herbicidal composition.

10. The process of preparing the stable herbicidal composition as claimed in claim 9, wherein the process further comprises:
adding the cyclohexanedione oxime herbicide and the second herbicide to the mixture under low shear; and
emulsifying the mixture under low shear to obtain the stable herbicidal composition as an emulsifiable concentrate (EC).

11. Use of a stable herbicidal composition for controlling weeds at a locus, said stable herbicidal composition comprising
at least one first herbicide comprising a cyclohexanedione oxime herbicide which is clethodim,
or a salt thereof,
at least one second herbicide,
a recovery promoting agent comprising an alkyl ester of a dicarboxylic acid; and
a solvent comprising a C₁-C₄ alkyl ester of a C₅ -C₂₀ saturated or unsaturated fatty acid,
wherein the second herbicide comprises a triazolone herbicide which is carfentrazone-ethyl, or a salt thereof,
wherein the composition is an emulsifiable concentrate, and
wherein a weight ratio of the recovery promoting agent to the solvent is from 1: 10 to 10: 1.

12. Use of a stable herbicidal composition as claimed in claim 11, wherein a weight ratio of the recovery promoting agent to the solvent is from 1:3 to 3:1.

13. Use of a stable herbicidal composition as claimed in claim 11 or 12, wherein the solvent comprises a methyl ester of a C₅₋₂₀ fatty acid, a mixture of C₁₆₋₁₈ unsaturated fatty acid methyl ester and C₁₈-unsaturated fatty acid methyl ester, or a combination thereof.

## Patentansprüche

1. Stabile Herbizidzusammensetzung, die umfasst:
mindestens ein erstes Herbizid, das ein Cyclohexandion-Oxim-Herbizid umfasst, das Clethodim ist,
oder ein Salz davon,
mindestens ein zweites Herbizid,
ein Rückgewinnungsförderungsmittel, das einen Alkylester einer Dicarbonsäure umfasst; und
ein Lösungsmittel, umfassend einen C₁-C₄-Alkylester einer gesättigten oder ungesättigten C₅-C₂₀-Fettsäure, wobei das zweite Herbizid ein Triazolon-Herbizid umfasst, das Carfentrazone-ethyl oder ein Salz davon ist,
wobei die Zusammensetzung ein emulgierbares Konzentrat ist, und
wobei das Rückgewinnungsförderungsmittel und das Lösungsmittel in einem Gewichtsverhältnis von etwa 1:10 bis etwa 10: 1 vorhanden sind, wobei "etwa" ∓10 % des angegebenen Wertes bedeutet.

2. Stabile Herbizidzusammensetzung nach Anspruch 1, wobei das Rückbildungsförderungsmittel ein Gemisch aus zweibasigen Estern von Dicarbonsäure umfasst.

3. Stabile Herbizidzusammensetzung nach Anspruch 2, wobei das Rückbildungsförderungsmittel Dimethylglutarat, Dimethylsuccinat, Dimethyladipat oder eine Kombination davon umfasst.

4. Stabile Herbizidzusammensetzung nach Anspruch 1, wobei das Lösungsmittel einen Methylester einer C₅₋₂₀-Fettsäure, eine Mischung aus C₁₆₋₁₈ ungesättigtem Fettsäuremethylester und C₁₈-ungesättigtem Fettsäuremethylester oder eine Kombination davon umfasst.

5. Stabile Herbizidzusammensetzung nach Anspruch 1, wobei das Rückgewinnungsförderungsmittel und das Lösungsmittel in einem Gewichtsverhältnis von etwa 1:3 bis etwa 3:1 vorhanden sind, wobei "etwa" ∓10 % des angegebenen Wertes bedeutet.

6. Stabile Herbizidzusammensetzung nach Anspruch 1, wobei das Rückgewinnungsförderungsmittel und das Lösungsmittel in einem Gewichtsverhältnis von 1:1 vorhanden sind,

7. Stabile Herbizidzusammensetzung nach Anspruch 1, wobei die Zusammensetzung von etwa 0,1 Gew.-% bis etwa 70 Gew.-% Cyclohexandionoxim-Herbizid, 0,1 Gew.-% bis etwa 70 Gew.-% zweites Herbizid, 1 % Gew.-% bis etwa 70 Gew.-% Rückgewinnungsförderer, und von etwa 1 Gew.-% bis etwa 99 Gew.-% Lösungsmittel, bezogen auf das Gesamtgewicht der stabilen Herbizidzusammensetzung umfasst, wobei "etwa" ∓10 % des angegebenen Wertes bedeutet.

8. Stabile Herbizidzusammensetzung nach Anspruch 1, wobei die Zusammensetzung von etwa 10 Gew.-% bis etwa 30 Gew.-% Clethodim, von etwa 1 Gew.-% bis etwa 10 Gew.-% Carfentrazone-ethyl, von etwa 10 Gew.-% bis etwa 50 Gew.-% einer Mischung umfasst, die Dimethylglutarat, Dimethylsuccinat und Dimethyladipat umfasst, und von etwa 30 Gew.-% bis etwa 80 Gew.-% eines Methylester-Lösungsmittels umfasst, bezogen auf das Gesamtgewicht der stabilen Herbizidzusammensetzung, wobei "etwa" ∓10 % des angegebenen Wertes bedeutet.

9. Verfahren zur Herstellung der stabilen Herbizidzusammensetzung nach Anspruch 1, wobei das Verfahren umfasst:
Zugeben des Rückgewinnungsförderers und optional eines oder mehrerer Tenside und/oder Hilfsstoffe zu dem Lösungsmittel, um eine Mischung zu bilden; und
Zugeben des ersten Herbizids und des zweiten Herbizids zu der Mischung, um die stabile Herbizidzusammensetzung herzustellen.

10. Verfahren zur Herstellung der stabilen Herbizidzusammensetzung nach Anspruch 9, wobei das Verfahren ferner umfasst:
Zugeben des Cyclohexandionoxim-Herbizids und des zweiten Herbizids zu dem Gemisch unter geringer Scherung; und
Emulgieren der Mischung unter geringer Scherung, um die stabile Herbizidzusammensetzung als emulgierbares Konzentrat (EC) zu erhalten.

11. Verwendung einer stabilen Herbizidzusammensetzung zur Bekämpfung von Unkraut an einem Standort, wobei die stabile Herbizidzusammensetzung umfasst
mindestens ein erstes Herbizid, das ein Cyclohexandion-Oxim-Herbizid umfasst, das Clethodim ist,
oder ein Salz davon,
mindestens ein zweites Herbizid,
ein Rückgewinnungsförderungsmittel, das einen Alkylester einer Dicarbonsäure umfasst; und
ein Lösungsmittel, umfassend einen C₁-C₄-Alkylester einer gesättigten oder ungesättigten C₅-C₂₀-Fettsäure, wobei das zweite Herbizid ein Triazolon-Herbizid umfasst, das Carfentrazone-ethyl oder ein Salz davon ist,
wobei die Zusammensetzung ein emulgierbares Konzentrat ist, und
wobei das Gewichtsverhältnis des Rückgewinnungsförderers zum Lösungsmittel 1:10 bis 10:1 beträgt.

12. Verwendung einer stabilen Herbizidzusammensetzung nach Anspruch 11, wobei das Gewichtsverhältnis des Rückgewinnungsförderers zum Lösungsmittel 1:3 bis 3:1 beträgt.

13. Verwendung einer stabilen Herbizidzusammensetzung nach Anspruch 11 oder 12, wobei das Lösungsmittel einen Methylester einer C₅₋₂₀-Fettsäure, eine Mischung aus C₁₆₋₁₈ ungesättigtem Fettsäuremethylester und C₁₈-ungesättigtem Fettsäuremethylester oder eine Kombination davon umfasst.

## Revendications

1. Composition herbicide stable comprenant :
au moins un premier herbicide comprenant un herbicide oxime de cyclohexanedione consistant en le cléthodime, ou un sel de celui-ci,
au moins un deuxième herbicide,
un agent favorisant la récupération comprenant un ester alkylique d'un acide dicarboxylique, et
un solvant comprenant un ester alkylique en C₁-C₄ d'un acide gras saturé ou insaturé en C₅-C₂₀ ;
le deuxième herbicide comprenant un herbicide triazolone consistant en le carfentrazone-éthyle ou un sel de celui-ci,
la composition étant un concentré émulsifiable, et
l'agent favorisant la récupération et le solvant étant présents dans un rapport pondéral d'environ 1:10 à environ 10:1, où « environ » signifie ∓10 % de la valeur indiquée.

2. Composition herbicide stable selon la revendication 1, dans laquelle l'agent favorisant la récupération comprend un mélange d'esters dibasiques d'acide dicarboxylique.

3. Composition herbicide stable selon la revendication 2, dans laquelle l'agent favorisant la récupération comprend le glutarate de diméthyle, le succinate de diméthyle, l'adipate de diméthyle ou une combinaison de ceux-ci.

4. Composition herbicide stable selon la revendication 1, dans laquelle le solvant comprend un ester méthylique d'un acide gras en C₅₋₂₀, un mélange d'ester méthylique d'acide gras insaturé en C₁₆₋₁₈ et d'ester méthylique d'acide gras insaturé en C₁₈, ou une combinaison de ceux-ci.

5. Composition herbicide stable selon la revendication 1, dans laquelle l'agent favorisant la récupération et le solvant sont présents dans un rapport pondéral d'environ 1:3 à environ 3:1, où « environ » signifie ∓10 % de la valeur indiquée.

6. Composition herbicide stable selon la revendication 1, dans laquelle l'agent favorisant la récupération et le solvant sont présents dans un rapport pondéral d'environ 1:1.

7. Composition herbicide stable selon la revendication 1, ladite composition comprenant environ 0,1 % p/p à environ 70 % p/p d'herbicide oxime de cyclohexanedione, 0,1 % p/p à environ 70 % p/p d'un deuxième herbicide, 1 % p/p à environ 70 % p/p d'agent favorisant la récupération, et environ 1 % p/p à environ 99 % p/p de solvant, par rapport au poids total de la composition herbicide stable, où « environ » signifie ∓10 % de la valeur indiquée.

8. Composition herbicide stable selon la revendication 1, ladite composition comprenant environ 10 % p/p à environ 30 % p/p de cléthodime, environ 1 % p/p à environ 10 % p/p de carfentrazone-éthyle, environ 10 % p/p à environ 50 % p/p d'un mélange comprenant du glutarate de diméthyle, du succinate de diméthyle et de l'adipate de diméthyle, et environ 30 % p/p à environ 80 % p/p d'un solvant ester méthylique, par rapport au poids total de la composition herbicide stable, où « environ » signifie ∓10 % de la valeur indiquée.

9. Procédé de préparation de la composition herbicide stable selon la revendication 1, le procédé comprenant :
l'ajout de l'agent favorisant la récupération et facultativement d'un ou plusieurs tensioactifs et/ou ingrédients auxiliaires au solvant pour former un mélange, et
l'ajout du premier herbicide et du deuxième herbicide au mélange pour produire la composition herbicide stable.

10. Procédé de préparation de la composition herbicide stable selon la revendication 9, le procédé comprenant en outre :
l'ajout de l'herbicide oxime de cyclohexanedione et du deuxième herbicide au mélange sous faible cisaillement, et
l'émulsification du mélange sous faible cisaillement pour obtenir la composition herbicide stable sous forme de concentré émulsifiable (EC).

11. Utilisation d'une composition herbicide stable pour contrôler les mauvaises herbes à un endroit donné, ladite composition herbicide stable comprenant :
au moins un premier herbicide comprenant un herbicide oxime de cyclohexanedione consistant en le cléthodime, ou un sel de celui-ci,
au moins un deuxième herbicide,
un agent favorisant la récupération comprenant un ester alkylique d'un acide dicarboxylique, et
un solvant comprenant un ester alkylique en C₁-C₄ d'un acide gras saturé ou insaturé en C₅-C₂₀ ;
le deuxième herbicide comprenant un herbicide triazolone consistant en le carfentrazone-éthyle, ou un sel de celui-ci,
la composition étant un concentré émulsifiable, et
un rapport pondéral de l'agent favorisant la récupération au solvant étant de 1:10 à 10:1.

12. Utilisation d'une composition herbicide stable selon la revendication 11, dans laquelle le rapport pondéral de l'agent favorisant la récupération au solvant est de 1:3 à 3:1.

13. Utilisation d'une composition herbicide stable selon la revendication 11 ou 12, dans laquelle le solvant comprend un ester méthylique d'un acide gras en C₅₋₂₀, un mélange d'ester méthylique d'acide gras insaturé en C₁₆₋₁₈ et d'ester méthylique d'acide gras insaturé en C₁₈, ou une combinaison de ceux-ci.
